# EUROPÄISCHE PATENTANMELDUNG

(11) **EP 0 645 653 A2**
(43) Veröffentlichungstag der Anmeldung: **29.03.1995**
(21) Anmeldenummer: 94110917.5
(22) Anmeldetag: 13.07.1994
(51) Int. Cl.: G02B 6/42, H04L 12/40, H04B 10/24, H04B 10/207, B60R 21/00

(54) **Elektro/optische kombinierte Sende- und Empfangseinrichtung für Lichtwellenleiter, insbesondere zur Verwendung in einem Lichtwellenleiter-Bus**

(30) Priorität: 27.08.1993 DE 4328970
(71) Anmelder: SIEMENS AKTIENGESELLSCHAFT, D-80333 München (DE)
(72) Erfinder: Jansseune, Luc, Ing., D-81739 München (DE)

(57) **Zusammenfassung**

Ein Sende- und ein Empfangselement (2,3) sind derart eng benachbart angeordnet, daß sie Zugriff auf die gleiche Lichtwellenleiter-Schnittstelle (41) haben. Dies ermöglicht insbesondere den Aufbau eines stark vereinfachten optischen seriellen Multimaster-Bussystems mit optischem Sternkoppler und Einleiter-Lichtwellenleiterverbindungen, auf dem Standard-Autobusprotokolle implementierbar sind.

Auf einem Substratträger (5), insbesondere einem gestanzten metallenen Systemträger, sind dicht nebeneinander eine Lumineszenzdiode (2) als Sendeelement und eine Fotodiode (3) als Empfangselement angeordnet. Die beiden Dioden (2) und (3) sind derart eng benachbart, daß sie Zugriff auf ein und dieselbe Lichtwellenleiter-Schnittstelle (4) haben. Als Sende- und Empfangselemente können prinzipiell alle geeigneten elektro/optischen Wandler verwendet werden, wobei jedoch für das Sendeelement eine Lumineszenzdiode gegenüber einer Laserdiode wesentlich vorteilhafter ist, da anderenfalls die Laserlichteinstrahlung auf den anderen Sendedioden Störungen verursachen kann. Als weitere auf dem Substratträger (5) angeordnete Bauelemente sind in Figur 1 ein integrierter Schaltkreis (6) und ein diskretes Bauelement, beispielsweise ein Kondensator (7), dargestellt, die mit den Sende- und Empfangselementen (2) und (3) elektrisch verbunden sind und mit ihnen zusammen eine Auswerteschaltung bilden. Die gesamte Anordnung ist mit einem Gehäuse (8) versehen und bildet ein S/E-Modul (1), in das auch die Lichtwellenleiter-Schnittstelle (4) integriert ist.

## Beschreibung

Die Erfindung betrifft eine elektro/optische kombinierte Sende- und Empfangseinrichtung für Lichtwellenleiter, insbesondere zur Verwendung in einem Lichtwellenleiter-Bus.

Eine derartige Einrichtung ist aus dem Artikel von M. Agethen und N. Rucks, Elektronik 18/1992, Seiten 56 bis 60, bekannt. Es handelt sich dabei um eine auf dem Markt erhältliche genormte optische Duplex-Steckverbindung, bei der zwei elektro/optische Wandler mit relativ großem Abstand zueinander in einem Stecker integriert und jeweils für sich an eine Lichtwellenleiter-Ader angebunden sind, wobei die beiden Adern von einer gemeinsamen Isolierhülle umgeben sind.

Aus dem genannten Artikel ist auch ein im folgenden anhand der Figuren 2 bis 4 noch näher erläutertes optisches serielles Multimaster-Bussystem mit implementierbarem Standard-Autobusprotokoll bekannt, bei dem die Bus-Teilnehmer jeweils mittels einer der bekannten kombinierten Sende- und Empfangseinrichtungen über jeweils zwei Lichtwellenleiter mit einem passiven optischen Sternkoppler und dadurch miteinander verbunden sind. Bekannt sind demnach die Komponenten eines Lichtwellenleiter-Bussystems mit Arbitrierung, jedoch nur in Zweileiter-Ausführung.

Der Erfindung liegt die Aufgabe zugrunde, eine neue, weniger aufwendige elektro/optische kombinierte Sende- und Empfangseinrichtung für Lichtwellenleiter zu schaffen, die insbesondere, aber nicht nur zur Vereinfachung eines Lichtwellenleiter-Bussystems geeignet ist.

Diese Aufgabe wird mit einer Sende- und Empfangseinrichtung der eingangs genannten Art gemäß der Erfindung dadurch gelöst, daß ein Sende- und ein Empfangselement derart eng benachbart angeordnet sind, daß sie Zugriff auf die gleiche Lichtwellenleiter-Schnittstelle haben.

Die erfindungsgemäße kombinierte Sende- und Empfangseinrichtung ermöglicht in geeigneten Fällen, in denen keine permanente Vorwärts- und Rückwärtsverbindung benötigt wird, vorteilhafterweise die Ankopplung an eine Einleiter-Lichtwellenleiterverbindung. Dies kann vorteilhaft zur Vereinfachung insbesondere von optischen Bussystemen, bei denen die Teilnehmer üblicherweise durch eine Zweileiter-Lichtwellenleiter-Verbindung mit dem Bus verbunden sind, verwendet werden.

Besonders vorteilhaft ist ein optisches serielles Multimaster-Bussystem mit mindestens zwei erfindungsgemäßen Sende- und Empfangseinrichtungen, bei dem die Bus-Teilnehmer jeweils mit einer der kombinierten Sende- und Empfangseinrichtungen elektrisch verbunden sind, und durch diese über jeweils nur einen Lichtwellenleiter mit einem passiven optischen Sternkoppler und dadurch miteinander verbunden sind. Durch dieses erfindungsgemäße Konzept wird die Anzahl der Lichtwellenleiter-Koppelstecker auf die Hälfte reduziert, ebenso wie die Anzahl und damit auch die Länge der Lichtwellenleiter selbst.

Weitere Ausgestaltungen der Erfindung sind in den Unteransprüchen gekennzeichnet. Die Erfindung und weitere Vorteile werden nachfolgend an einem Ausführungsbeispiel anhand der Zeichnung näher erläutert. Es zeigen
- Figur 1: in geschnittener Seitenansicht eine erfindungsgemäße Sende- und Empfangseinrichtung.
- Figur 2: ein herkömmliches elektrisches Bussystem.
- Figur 3: die Wirkungsweise der Arbitration bei Buskonflikt am Beispiel eines herkömmlichen Autobusprotokolls
- Figur 4: ein herkömmliches optisches Zweileiter-Bussytem mit Sternstruktur.
- Figur 5: ein erfindungsgemäßes optisches Einleiter-Bussystem mit Sternstruktur.

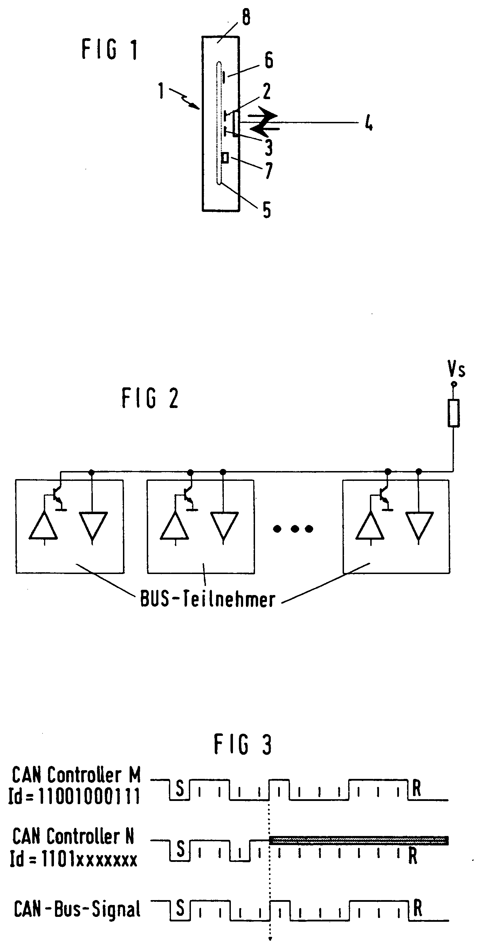

Mit 1 ist in Figur 1 ein erfindungsgemäßes Sende- und Empfangs(S/E)-Modul bezeichnet. Auf einem Substratträger 5, insbesondere einem gestanzten metallenen Systemträger, sind dicht nebeneinander eine Lumineszenzdiode 2 als Sendeelement und eine Fotodiode 3 als Empfangselement angeordnet. Die beiden Dioden 2 und 3 sind derart eng benachbart, daß sie Zugriff auf ein und dieselbe Lichtwellenleiter-Schnittstelle 4 haben. Als Sende- und Empfangselemente können prinzipiell alle geeigneten elektro/optischen Wandler verwendet werden, wobei jedoch für das Sendeelement eine Lumineszenzdiode gegenüber einer Laserdiode wesentlicht vorteilhafter ist, da anderenfalls die Laserlichteinstrahlung auf den anderen Sendedioden Störungen verursachen kann. Als weitere auf dem Substratträger 5 angeordnete Bauelemente sind in Figur 1 ein integrierter Schaltkreis 6 und ein diskretes Bauelement, beispielsweise ein Kondensator 7, dargestellt, die mit den Sende- und Empfangselementen 2 und 3 elektrisch verbunden sind und mit ihnen zusammen eine Auswerteschaltung bilden. Die gesamte Anordnung ist mit einem Gehäuse 8 versehen und bildet ein S/E-Modul 1, in das auch die Lichtwellenleiter-Schnittstelle 4 integriert ist.

Nicht dargestellt in Figur 1 sind die elektrischen Anschlüsse des Moduls 1 und der in der Schnittstelle 4 endende Lichtwellenleiter.

Um physikalische Verbindungsleitungen einzusparen bzw. die vorhandenen Kanäle optimal nutzen zu können, ist es bekannt, ein Kommunikationsnetz in der Form eines "Busses" zu realisieren, wobei die Mehrfachausnutzung eines einzigen Übertragungsmediums für alle Netzteilnehmer, beispielsweise verdrillte elektrische Zweidrahtleitungen, oder ein Zweileiter-Lichtwellenleiter, im Zeitmultiplex-Verfahren im Mittelpunkt steht. Zur Begrenzung der mit zunehmendem Elektronikanteil in Kraftfahrzeugen wachsenden Kabelbäume werden zunehmend serielle Feldbuskonzepte, sogenannte Autobusse, beispielsweise CAN, ABUS, VAN, J1850, entwickelt. Diese Busse dienen der Vernetzung von Steuergeräten, Aktoren und Sensoren innerhalb eines Automobils, oder allgemein in Industriesteuerungen. Die verschiedenen Multimaster-Buskonzepte stimmen in ihrem Buszugriffsverfahren im wesentlichen überein. Die Mehrfachausnutzung des Übertragungsmediums erfordert eine Vereinbarung über die Kommunikationsorganisation, also darüber, wer zu welchem Zeitpunkt das Übertragungsmedium benutzen darf. Diese Vereinbarung, das Busprotokoll, bewirkt bei der Multimaster-Buszugriffstechnik, daß immer nur ein Bus-Teilnehmer spricht und alle anderen zuhören. Der Teilnehmer (Master), der sprechen will, kontrolliert zunächst, ob kein anderer Teilnehmer sprechen will. Wenn ein anderer Teilnehmer spricht, dann wartet er mit Sprechen und hört zu. Der Konfliktfall, wenn zwei Teilnehmer gleichzeitig anfangen zu sprechen, wird durch ein Arbitrierungssystem geregelt. Dieses beruht in an sich bekannter Weise auf der Unterscheidbarkeit von dominanten und rezessiven Bitsignalen, die zunächst anhand des in Figur 2 dargestellten herkömmlichen nicht-optischen Busses erläutert wird.

In Figur 2 ist eine Busleitung dargestellt, an der ein Potential Vs anliegt. Eine Anzahl von Bus-Teilnehmern ist jeweils, wie dargestellt, über zwei Anschlüsse mit der Busleitung elektrisch verbunden, so daß die Teilnehmer digitale elektrische Signale über die dargestellten Transistoren auf die Busleitung geben, bzw. derartige, an der Busleitung anliegende Signale empfangen können. Jeder Bus-Teilnehmer kann die Busleitung auf "Low" ziehen, indem er an die Basis des jeweiligen in Figur 2 dargestellten Transistors ein "Eins"-Bitsignal anlegt und über den leitenden Kollektor einen Spannungsabfall auf der Busleitung bewirkt. Wenn ein Teilnehmer busseitig einen Spannungszustand "Low", entsprechend einem "Null"-Bitsignal erzeugt hat, so kann kein anderer Teilnehmer den Bus auf "High" bringen. Die busseitigen Spannungssignale "Low" sind also dominierend gegenüber busseitigen Spannungssignalen "High".

In Figur 3 ist am Beispiel des in der Industrie häufig eingesetzten Busprotokolls CAN die Funktionsweise des auf der Dominanz des busseitigen "Null-Signals" gegenüber dem rezessiven "Eins"-Signal beruhenden Arbitrierungssystem dargestellt. Vertikal übereinander dargestellt ist jeweils der Beginn des Bustelegramms der Bus-Teilnehmer M und N sowie, zuunterst, das resultierende Bus-Signal. Auf das Startbit S folgt jeweils ein 11-Bit-Identifier, der mit jeder Nachricht übertragen wird. Jede Nachricht, die gesendet wird, kann von allen Teilnehmern gleichzeitig empfangen werden. Bei Konflikt, also wenn mehrere Teilnehmer gleichzeitig zu senden beginnen, setzt sich der Teilnehmer, der die Nachricht mit dem jeweils am höchsten priorisierten Identifier sendet, durch.

Im einzelnen läuft der Vorgang so ab, daß alle Teilnehmer mit aktivem Sendeauftrag nach Synchronisation mit dem Aussenden des Identifiers beginnen. Durch Rücklesen des Buspegels zu jeder Bitzeit prüft jeder Teilnehmer, ob gesendetes und gelesenes Bit übereinstimmen. Erkennt ein Teilnehmer, daß der Buspegel dominant ist, obwohl er ein rezessives Signal gesendet hat, so bricht er das Senden ab und wird zum Empfänger. Im in Figur 3 dargestellten Beispiel bemerkt demnach der Teilnehmer N schon bei Sendung des vierten Bit, daß seine gesendete Information nicht mit der empfangenen Information übereinstimmt. Teilnehmer N hat die Arbitrierung verloren und wird Zuhörer. Generell bleibt nach Aussenden des vollständigen Identifiers nur noch ein Teilnehmer als Sender aktiv.

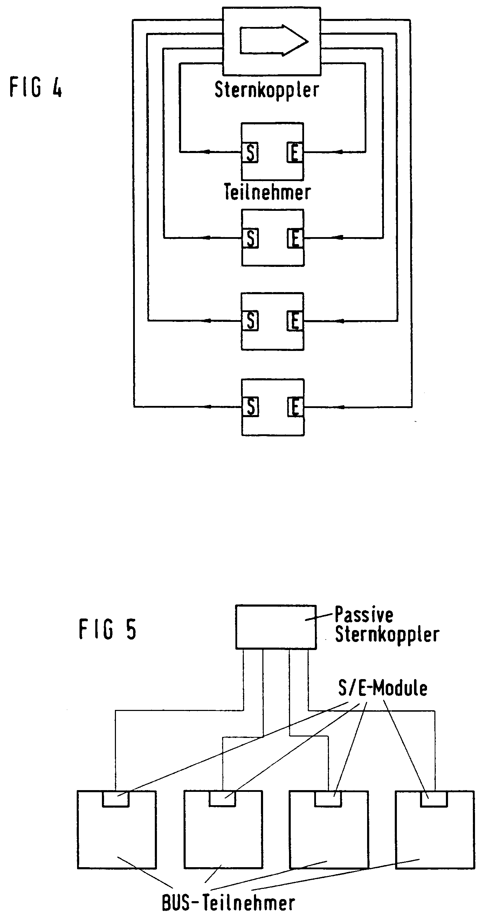

Bei Lichtwellenleiter-Übertragung funktioniert das zuvor geschilderte Arbitrierungssystem genauso, wenn "Licht an" gleich einem "Low-Signal" gesetzt wird und die optischen Sender/Empfänger über einen Sternkoppler miteinander verbunden werden. Ein derartiges, bereits aus dem Artikel von M. Agethen et al bekanntes optisches Bussystem mit Sternstruktur ist in Figur 4 dargestellt. Ein an sich bekannter passiver Sternkoppler ist bei Netzwerken mit kleinen Distanzen die sicherste und kostengünstigste Lösung. Das in Figur 4 dargestellte bekannte optische Zweileiter-Bussystem ist jedoch aufwendig.

In Figur 5 ist ein erfindungsgemäßes optisches Bussystem dargestellt, bei dem die Bus-Teilnehmer jeweils mit einer der kombinierten Sende- und Empfangseinrichtungen elektrisch verbunden sind, und mittels dieser über jeweils nur einen Lichtwellenleiter mit einem passiven optischen Sternkoppler, insbesondere einem Reflexionskoppler, und dadurch miteinander verbunden sind. Die Sender /Empfänger-Module mit vereinigtem Sender und Empfänger sowie die Lichtwellenleiter-Schnittstellen sind im Stern geschaltet und zwar mit sehr geringen Verlusten. Zur Arbitrierung ist ein Standard-Autobusprotokoll, wie beispielsweise CAN, implementierbar, wobei der Zustand "Licht an" natürlich tatsächlich dominant gegenüber "Licht aus" ist. Der Empfänger sieht Licht vom eigenen Sender und auch von der Bus-Leitung. Wenn der eigene Sender Sender kein Licht, also ein rezessives Signal, ausstrahlt, aus der Busleitung jedoch ein Lichtsignal ankommt, so wird der jeweilige Teilnehmer vom Sender zum Empfänger.

Das erfindungsgemäße Konzept bietet über die bereits geschilderten Vorteile hinaus auch die Möglichkeit, in ihrem Aufbau vereinfachte Sternkoppler einzusetzen. Durch die schnelleren Reaktionszeiten bei der Arbitrage ist der erfindungsgemäße Bus schneller. Mit der verringerten Anzahl Schnittstellen ist auch die Dämpfung im Übertragungssystem geringer, was insbesondere für Kunststoff-Lichtwellenleiter eine vorteilhafte Erhöhung der überbrückbaren Distanz mit sich bringt. Das erfindungsgemäße Sender/Empfänger-Modul ist alleine oder bei Verwendung im beschriebenen Bussystem insgesamt weniger aufwendig und zuverlässiger als bisher bekannte Lösungen.

Durch Verbinden von mehreren erfindungsgemäßen passiven Bussystemen durch einen aktiven optischen Sternkoppler lassen sich komplexe Netzwerke aufbauen. Mit Hilfe einer aktiven Kopplung sind auch hybride Lösungen von erfindungsgemäßen optischen und von elektrischen Netzwerken möglich.

## Patentansprüche

1. Elektro/optische kombinierte Sende- und Empfangseinrichtung für Lichtwellenleiter, insbesondere zur Verwendung in einem Lichtwellenleiter-Bus, **dadurch gekennzeichnet**, daß ein Sende- und ein Empfangselement derart eng benachbart angeordnet sind, daß sie Zugriff auf die gleiche Lichtwellenleiter-Schnittstelle haben.

2. Elektro/optische kombinierte Sende- und Empfangseinrichtung für Lichtwellenleiter nach Anspruch 1, **dadurch gekennzeichnet**, daß das Sendeelement als Lumineszenzdiode ausgebildet ist.

3. Elektro/optische kombinierte Sende- und Empfangseinrichtung für Lichtwellenleiter nach Anspruch 1 oder 2, **dadurch gekennzeichnet**, daß das Empfangselement als Photodiode ausgebildet ist.

4. Elektro/optische kombinierte Sende- und Empfangseinrichtung für Lichtwellenleiter nach einem der Ansprüche 1 bis 3, **dadurch gekennzeichnet**, daß das Sende- und das Empfangselement zusammen mit weiteren elektronischen Bauelementen, insbesondere einem integrierten Schaltkreis, auf einem Substratträger angeordnet und zu einer Auswerteschaltung verbunden ist, die ein mit einem Gehäuse und mit elektrischen Anschlüssen versehenes Modul bildet, in das auch die Lichtwellenleiter-Schnittstelle integriert ist.

5. Elektro/optische kombinierte Sende- und Empfangseinrichtung für Lichtwellenleiter nach Anspruch 4, **dadurch gekennzeichnet**, daß der Substratträger als gestanzter metallener Systemträger ausgebildet ist.

6. Optisches serielles Multimaster-Bussystem mit mindestens zwei elektro/optischen kombinierten Sende- und Empfangseinrichtungen nach einem der Ansprüche 1 bis 5, **dadurch gekennzeichnet**, daß die Bus-Teilnehmer jeweils mit einer der kombinierten Sende- und Empfangseinrichtungen elektrisch verbunden und durch diese über jeweils nur einen Lichtwellenleiter mit einem passiven optischen Sternkoppler und dadurch miteinander verbunden sind.

7. Optisches serielles Multimaster-Bussystem nach Anspruch 6, **dadurch gekennzeichnet**, daß zur Kollisionserkennung und Botschaftspriorisierung ein auf der Unterscheidung dominanter und rezessiver Bits beruhendes Standard-Autobusprotokoll implementierbar ist, wobei der Zustand "Licht an" dominant gegenüber "Licht aus" ist.

8. Optisches Netzwerk mit mindestens zwei Bussystemen nach Anspruch 6 oder 7, **dadurch gekennzeichnet**, daß die Bussysteme durch einen aktiven optischen Sternkoppler zu einem Netzwerk verbunden sind.

9. Hybrides Netzwerk, bei dem mindestens ein Bussystem gemäß Anspruch 6 oder 7 durch mindestens einen aktiven elektro/optischen Koppler mit mindestens einem elektrischen Teilnetzwerk zu einem Netzwerk verbunden ist.
